# FASCICULE DE BREVET EUROPEEN

(11) **EP 0 471 621 B1**
(45) Date de publication et mention de la délivrance du brevet: **02.11.1995**
(21) Numéro de dépôt: 91402239.7
(22) Date de dépôt: 13.08.1991
(51) Int. Cl.: C03B 23/03, C03B 23/035

(54) **Procédé et dispositif de bombage de feuilles de verre**
Verfahren und Vorrichtung zum Biegen von Glasscheiben
Method and apparatus for bending sheets of glass

(30) Priorité: 17.08.1990 DE 4026094
(43) Date de publication de la demande: 19.02.1992
(73) Titulaire: SAINT-GOBAIN VITRAGE, 92400 Courbevoie (FR); VEGLA Vereinigte Glaswerke GmbH, D-52066 Aachen (DE)
(72) Inventeur: Vanaschen, Luc, B-4700 Eupen (BE); Kuster, Hans-Werner, W-5100 Aachen (DE); Havenith, Hubert, W-5102 Würselen (DE); Korsten, Wilfried, W-5138 Heinsberg (DE)
(74) Mandataire: Menes, Catherine

(56) Documents cités:
- FR-A- 2 284 570
- FR-A- 2 315 486
- FR-A- 2 359 795

## Description

L'invention concerne les techniques de production de vitrages bombés et éventuellement trempés très généralement destinés à l'équipement de véhicules automobiles. Plus précisément l'invention vise celles de ces techniques dans lesquelles les feuilles de verre préchauffées dans un four de bombage sont amenées en position horizontale sous un élément supérieur, plaquées contre cet élément supérieur au moyen d'une force de nature pneumatique et après cette opération de transfert déposées sur un élément inférieur de bombage, les feuilles de verre bombées subissant ultérieurement un refroidissement contrôlé de préférence du type trempe thermique.

Pour préchauffer une feuille de verre en vue de son bombage, la technique la plus avantageuse financièrement et qualitativement est d'utiliser une enceinte de type tunnel que la feuille de verre traverse, dans le sens longitudinal, au moyen d'un convoyeur disposé horizontalement ou sensiblement horizontalement et le plus souvent constitué par un lit de rouleaux moteurs. A la sortie du four - et pour ne considérer que les techniques de bombage évoquées plus haut et faisant l'objet de la présente invention -la feuille de verre est immobilisée sous un élément supérieur qui participe à son transfert depuis le convoyeur horizontal vers un élément inférieur généralement du type cadre annulaire ouvert en son centre.

Ces techniques ont fait l'objet de nombreux perfectionnements dont on trouvera des exemples, notamment dans les publications de brevet FR-B-2 085 464, EP-B-3 391, EP-B-5 306, EP-B-169 770, EP-B-240 418, EP-B-241 355 auxquelles il est renvoyé pour plus de détails.

La déformation requise pour le bombage est obtenue de nombreuses façons qui se différencient notamment par les rôles respectifs des éléments inférieur et supérieur. Si la courbure visée est faible, l'élément supérieur peut être constitué par une simple plaque plane qui va relâcher la feuille de verre sur un cadre annulaire dont le pourtour définit la forme définitive du vitrage (EP-B-3 391, EP-B-240 418). Pour une courbure un peu plus prononcée, l'élément supérieur sera lui-même galbé afin au minimum de préformer la feuille de verre (FR-B-2 085 464, EP-B-169 770, EP-B-241 355), la feuille de verre finissant le cas échéant d'acquérir sa forme définitive sur l'élément inférieur. Dans les deux cas, cet élément inférieur fait également office de cadre-support lors de l'opération suivante de trempe.

Si on poursuit cette progression vers des formes de vitrages de plus en plus complexes, une opération de pressage s'avère nécessaire, le plus souvent réalisée au moyen d'un cadre spécifique de pressage, la feuille de verre étant transférée après bombage sur un cadre spécifique de trempe. Enfin, le cadre de pressage peut être constitué non par un simple rail continu mais par une série d'éléments articulés entre eux, le cadre en se refermant venant par exemple ramener les parties latérales de la feuille de verre en direction de la partie centrale. Par ailleurs, il doit être également signalé que cette sophistication est souvent accompagnée par la substitution du cadre inférieur de bombage par une forme pleine de pressage, ou autre moyen équivalent destiné notamment à soutenir la partie centrale de la feuille de verre ; toutefois la maîtrise de la qualité optique est alors plus délicate, aussi nous nous intéresserons par la suite plus particulièrement aux cas où l'élément inférieur est du type cadre ouvert en son centre.

Cette évolution vers des machines de bombage de plus en plus sophistiquées s'accompagne d'une diminution des cadences de production et surtout d'une augmentation des risques de dégradation de la qualité optique du vitrage, tout simplement car le-nombre de manipulations subies par celui-ci s'accroît. De plus, quelle que soit la variante de réalisation choisie, un aspect déterminant du problème du bombage est la maîtrise de la température de la feuille de verre. Le comportement rhéologique du verre est bien connu, et peut très schématiquement se résumer ainsi : à temps de déformation constant, plus un élément de surface est chaud, plus la déformation maximale susceptible d'être obtenue (sans introduire de contraintes qui entraîneraient la casse du vitrage) est grande ; corollairement, à déformation constante, plus ce même élément de surface est chaud et moindre est le temps nécessaire pour obtenir cette déformation.

En pratique ces deux facteurs, temps de déformation et "amplitude" de la déformation, interviennent l'un comme l'autre et il n'est pas souhaitable de trop privilégier l'un ou l'autre. En effet, prolonger le temps de déformation accroît fortement les risques de marquage inhérents à l'opération de bombage ; quant à l'amplitude de la déformation, elle est pour sa part gouvernée par la forme du vitrage que l'on cherche à réaliser.

Les auteurs de la présente invention ont constaté que le passage à une variante plus complexe est le plus souvent dû à ce que quelques éléments de la surface d'une feuille de verre ont un comportement inadapté du point de vue rhéologique, dû essentiellement à un chauffage inadapté, cet élément de surface étant par exemple à la même température que le reste de la feuille alors que l'on cherche à la déformer plus intensément.

Ce problème de la précision du chauffage des feuilles de verre a déjà été abordé par le passé. Dans le brevet US-A-4 441 907, il est par exemple décrit des brûleurs qui accompagnent la feuille de verre dans une partie de sa course dans le four de bombage, ces brûleurs étant dans ce but montés sur des chariots déplacés parallèlement à l'axe du four. Dans la demande EP-A-338 216, il a d'autre part été proposé d'équiper le four de résistances additionnelles déplacées transversalement d'une manière synchronisée avec le déplacement longitudinal de la feuille de verre, de sorte que ces résistances chauffent précisément une ligne de bombage. Le défaut principal de ce type de chauffage localisé est qu'il est opéré relativement précocément d'où un risque d'homogénéisation au moins partielle de la température du vitrage par exemple lors du positionnement de la feuille de verre sous l'élément supérieur. De plus, l'intensité de la surchauffe doit être limitée si on veut exclure tout risque de déformation du vitrage.

Il a été également proposé, par exemple dans le brevet JP-B-88 058 771, de marquer les lignes de bombage d'une feuille de verre au moyen d'une peinture ou autre agent endothermique qui s'élimine sans laisser de trace. Là encore, l'essentiel de la surchauffe est obtenu bien avant le bombage. De plus la mise en oeuvre de ce procédé nécessite un poste supplémentaire pour le pistolétage de l'agent endothermique.

A ces actions dans le four de bombage peuvent s'ajouter ou se substituer des actions dans la cellule de bombage même. Des demandes de brevet FR-A-2 284 570 et FR-A-2 315 486, il est ainsi connu d'équiper les organes de compression d'une presse de bombage de feuilles de verre d'un certain nombre de brûleurs destinés à compenser le refroidissement de la feuille de verre qui se produit lorsque la presse est disposée à l'air libre, ces brûleurs agissant plus spécialement dans les régions où ce refroidissement est particulièrement intense en raison par exemple de la présence d'orifices traversants.

Mais la technique proposée ne permet pas une réelle localisation de la chauffe, par exemple le long d'une ligne de pliage, ne serait-ce que parce que les brûleurs sont en action avant même que la feuille de verre ne se soit arrêtée sous l'élément supérieur. D'autre part, compte tenu de ce que les feuilles de verre ne séjournent que très brièvement entre lesdits organes de compression, le procédé est surtout adapté au maintien d'une ambiance chaude, ambiance chaude qui, dans les techniques de bombage faisant l'objet de l'invention, est obtenue simplement par la disposition des outils de bombage dans le four même ou une dépendance de celui-ci. Enfin, les brûleurs proposés ne peuvent être montés en raison des risques d'incendie dans une cellule de bombage elle-même à la température de bombage.

En dehors de ces différentes actions de chauffage plus ou moins localisées, on connaît également des installations de bombage avec une assistance au formage dans les zones les plus difficiles à cambrer correctement, assistance réalisée au moyen de jets gazeux ponctuels qui exercent sur la feuille de verre une force d'appoint à la force principale d'application de la feuille de verre localement -notamment sur les bords - défaillante (EP-B-5 306 ou EP-298 426). Pour éviter la formation de défauts optiques, ces jets gazeux sont chauffés à une température sensiblement identique à celle de la feuille de verre à son entrée dans la cellule de bombage. Mais dans ce cas, le chauffage du gaz est donc réalisé uniquement pour éviter justement toute action thermique sur la feuille de verre ; et après que la feuille de verre ait été déposée sur l'élément inférieur, les zones d'impact de ces jets n'ont donc pas un potentiel de déformation supérieur à celui des zones environnantes.

Les auteurs de la présente invention se sont donnés pour but un moyen sûr et rapide de chauffer localement une feuille de verte en évitant les inconvénients précités.

Pour cela, il est proposé selon l'invention un procédé de bombage d'une feuille de verre préchauffée à température de bombage, amenée en position horizontale sous un élément supérieur, mise au contact dudit élément supérieur au moyen d'une force de nature pneumatique puis déposée sur un élément inférieur de bombage, la feuille de verre étant surchauffée localement par des flammes air-acétylène ou oxygène-acétylène.

L'emploi de mélanges gazeux acétyléniques du type air-acétylène ou oxygène-acétylène a pour avantage de permettre l'obtention des températures de flammes très élevées, notamment si on les compare avec celles obtenues avec tous les autres hydrocarbures notamment avec du gaz naturel, du méthane ou du propane. (température de flamme pour le mélange oxygène-acétylène : 3160°C). Dans la mesure où la feuille de verte se présente à la flamme avec une température supérieure à sa température de déformation plastique et de préférence supérieure à 620°C l'action du gaz chaud n'est pas préjudiciable à la qualité optique de la feuille de verre et ne conduit notamment pas à des déformations de la surface.

Par ailleurs, la température très élevée des flammes conduit à une action très rapide, qui peut être éventuellement compatible avec la vitesse de défilement des feuilles de verre sur le convoyeur. Il est ainsi possible d'opérer la surchauffe dans une zone intermédiaire située entre le four et le poste de bombage. Dans ce cas, les flammes seront dirigées vers la face supérieure de la feuille de verte.

Ce premier mode de réalisation a pour principal avantage un montage des brûleurs dans une zone relativement froide dont la température peut être par exemple maintenue inférieure à 200°C, soit une température bien inférieure à la température de décomposition de l'acétylène (300°C), décomposition qui pourrait entraîner par exemple le colmatage des brûleurs dû à la formation de particules solides de carbone.

Il est aussi possible de monter les brûleurs directement dans le poste de bombage, avec pour avantage que les flammes seront alors dirigées vers la face inférieure de la feuille de verre. En effet, les problèmes liés à la cuisson des émaux servant à la réalisation de décors et/ou de bandes d'encadrement font que l'élément supérieur a généralement une forme courbe à concavité tournée vers le haut, de sorte que le côté convexe du vitrage correspond à sa face inférieure. Or la déformation par extension est généralement plus critique que la déformation par écrasement subie par le côté concave et demande donc une température plus élevée.

Un autre aspect avantageux du procédé selon l'invention est que la quantité totale de chaleur apportée à la feuille de verre peut même être réduite car cette quantité est exactement apportée aux endroits voulus. Paradoxalement, ceci permet de travailler avec une feuille de verre relativement froide, rappelons que la variation de la viscosité du verre est très rapide dans les gammes de températures ici considérées et que la notion de chaud ou froid qui en découle joue à quelques degrés près. Un verre froid est synonyme d'une plus grande qualité optique et d'une meilleure courbure, la partie centrale de la feuille de verre non soutenue par le cadre annulaire avant le refroidissement par trempe thermique ayant une moindre tendance à se déformer sous l'effet de son propre poids. D'autre part, les éventuelles portions émaillées du vitrage sont toujours du côté concave du vitrage (tourné vers l'intérieur du véhicule après montage) et ne risquent donc pas d'être endommagées par ce soufflage de gaz très chaud sur la face opposée.

L'invention a également pour objet un dispositif de bombage d'une feuille de verre comportant au moins un four de bombage, un convoyeur horizontal, un poste de bombage isotherme avec le four et qui comporte un élément supérieur placé au-dessus dudit convoyeur, un élément inférieur venant récupérer la feuille de verre après qu'elle ait été transférée au contact dudit élément supérieur, et des moyens générant une force de nature pneumatique assurant le transfert au contact de l'élément supérieur, le chariot support dudit élément inférieur servant également de support à des brûleurs acétyléniques, ce qui assure un très bon positionnement des flammes par rapport à la feuille de verre donc une localisation optimale de la surchauffe.

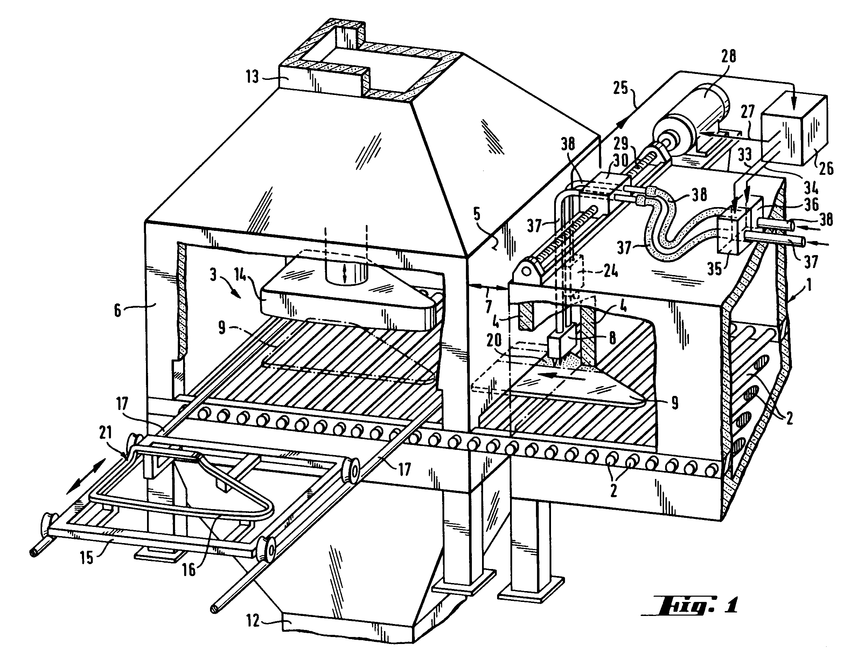

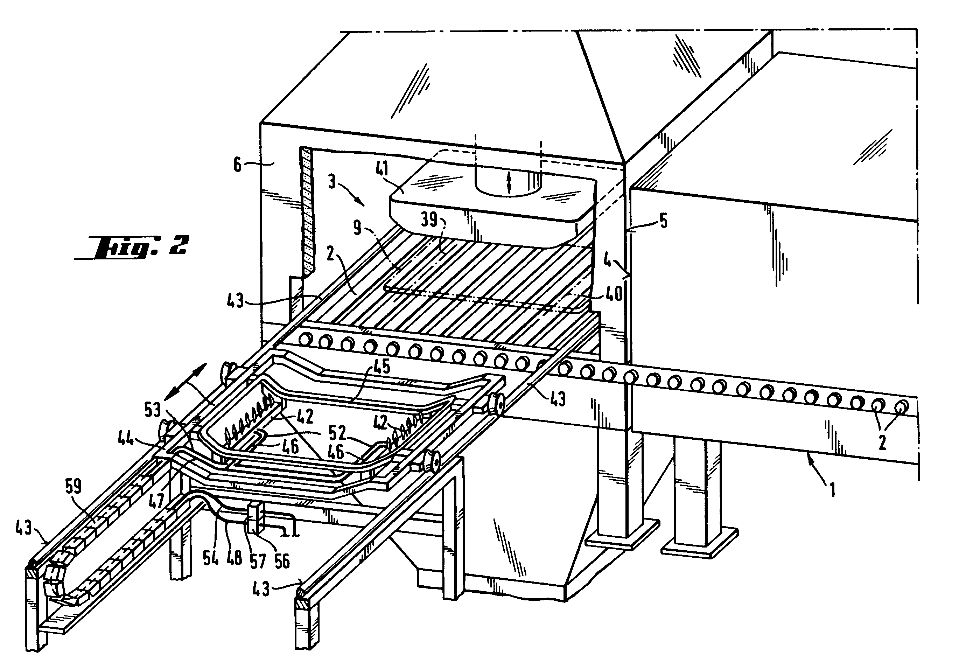

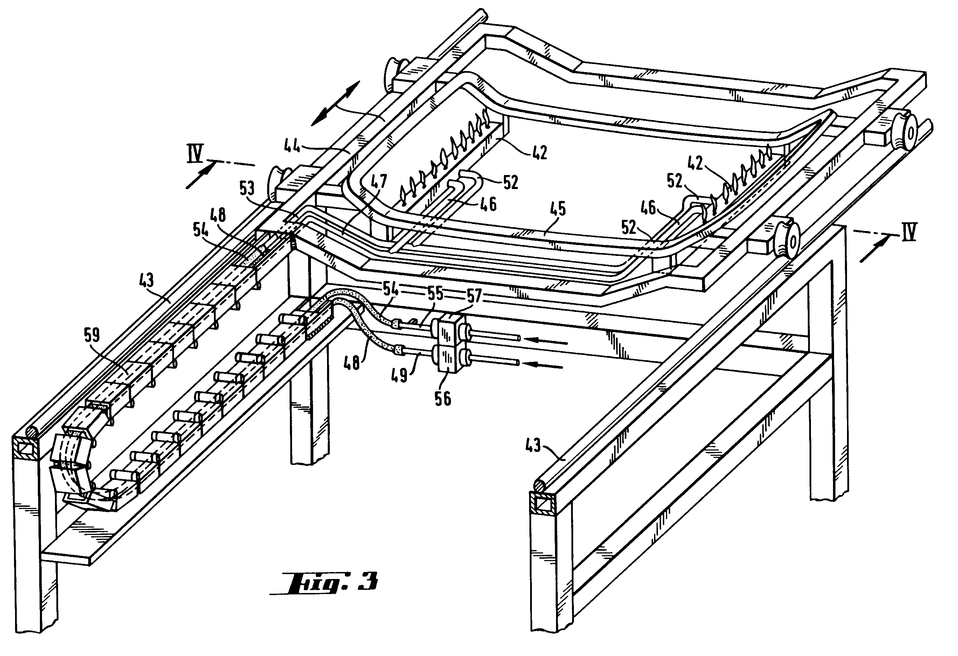

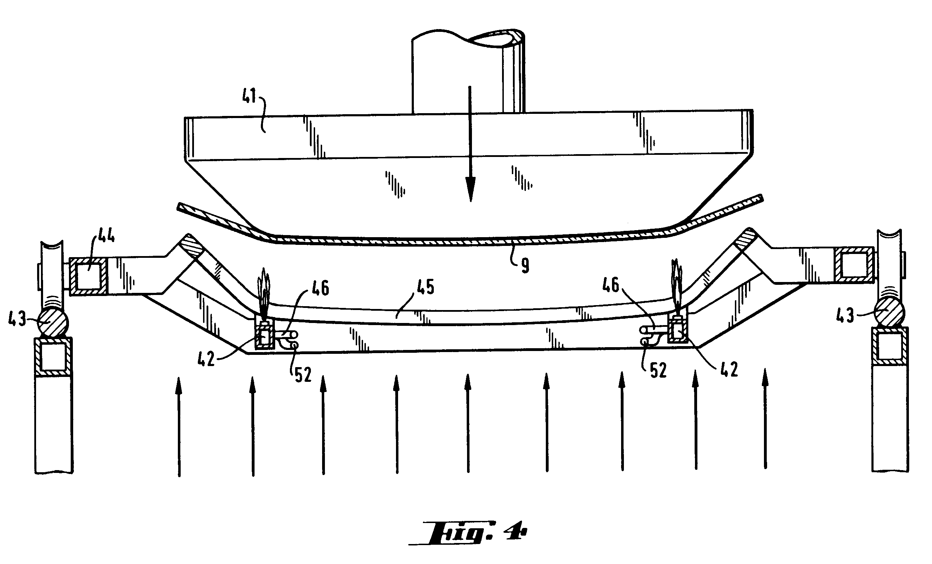

D'autres détails et caractéristiques avantageuses de l'invention ressortent de la description faite ci-après en référence aux dessins annexés qui représentent :
. **figure 1** : une installation de bombage de la feuille de verre avec des brûleurs à gaz montés entre le four et le poste de bombage,
. **figure 2** : une installation de bombage de la feuille de verre avec des brûleurs à gaz montés sur le chariot portant l'élément inférieur,
. **figure 3** : une vue à plus grande échelle du chariot représenté figure 1.
. **figure 4** : une presse de bombage composée d'une forme de bombage supérieure et d'un cadre annulaire, vue à l'instant précédant le processus de pressage.

Nous allons maintenant décrire un mode détaillé de réalisation de l'invention ici appliquée à une installation de bombage conforme aux enseignements de EP-B-169 770, c'est-à-dire dans laquelle le transfert de la feuille de verre du convoyeur horizontal à l'élément supérieur est obtenu au moyen d'un courant gazeux chaud ascendant. Toutefois, il est clair que l'invention est nullement limitée à ce type de transfert et qu'elle s'applique notamment aux procédés de bombage comportant une phase d'aspiration de la feuille de verre, soit directement au travers de l'élément supérieur, soit à la périphérie de la feuille de verre.

L'installation de bombage visible à la figure 1 comporte un four du type tunnel 1 dans lequel les feuilles de verre sont véhiculées par un convoyeur horizontal constitué par des rouleaux moteurs 2. Ce convoyeur débouche dans un poste de bombage 3, des ouvertures adéquates étant ménagées dans les parois 4 et 5 appartenant respectivement au four 1 et au poste de bombage 3. Cette dernière est par ailleurs limitée latéralement par une paroi 6, le poste de bombage devant être de préférence isotherme avec l'extrémité attenante au four, la température y régnant étant typiquement de l'ordre de 550-650°C et de préférence d'au moins 620°C, température convenant pour un bombage du verre. Le poste de bombage 3 est dit à sortie latérale, les feuilles de verre étant évacuées après bombage par une ouverture pratiquée dans la paroi opposée à la paroi 6.

Dans le cas de la figure 1, les parois 5 et 4 délimitant respectivement le poste de bombage 3 et le four 1, sont séparées par un espace intermédiaire 7, de sorte que la feuille de verre 9 passe brièvement hors des enceintes chauffées. Dans cet espace 7 est logé le brûleur à gaz 8 servant à surchauffer localement la feuille de verre.

Le poste de bombage 3 est en fait incorporé dans une cheminée avec des conduits inférieur 12 et supérieur 13, un courant gazeux ascendant chaud pouvant être émis par le conduit 12 et récupéré par le conduit 13 dans un circuit fermé. Cette station de bombage comporte un élément supérieur constitué par une forme de bombage mâle pleine 14, actionnée par un dispositif de montée-baisse. Dès que la feuille de verre est correctement positionnée par rapport à la forme de bombage 14, opération qui est simplifiée par la mise en route dès cet instant du ventilateur générant le courant gazeux ascendant, mais avec un niveau de pression faible, juste suffisant pour délester les rouleaux 2 d'une partie du poids de la feuille de verre 9 et limiter ainsi son frottement sur lesdits rouleaux.

A cette forme mâle 14 est associée une forme femelle constituée d'un cadre annulaire 16 ouvert en son centre. Ce cadre 16 est monté sur un chariot 15, qui entre et sort du poste de bombage sur les rails 17 montés parallèles aux rouleaux 2. Dès que la feuille de verre est soulevée du convoyeur et pressée contre la forme mâle 14, le chariot 15 est introduit dans le poste de bombage 3, juste à l'aplomb de la forme mâle 14 qui est alors descendue de manière à compléter le bombage de la feuille de verre 9 par un pressage entre la forme 14 et le cadre 16. Cette opération terminée, la forme 14 est à nouveau remontée et, selon les cas, la feuille de verre 9 est conduite au poste de trempe directement par le chariot 15 ou au moyen d'un autre chariot portant un cadre spécifique de trempe.

A sa sortie du four 1, la feuille de verre 9 est à une température convenant pour un bombage selon un rayon de courbure relativement grand. Mais cette température, qui convient pour la majeur partie du vitrage, est insuffisante dans la zone 20 destinée à être bombée très fortement et qui correspond à la portion 21 très fortement courbée du cadre 16. C'est donc dans cette zone 20 que va s'exercer l'action du brûleur 8 lors du défilement de la feuille de verre convoyée par les rouleaux 2.

La position transversale du brûleur 8 dépend de la localisation de la zone à surchauffer. Elle peut également être modifiée au cours du défilement de la feuille de verre 9, dans le cas où cette zone 20 ne s'étend pas parallèlement à l'axe de défilement de la feuille de verre. Pour ce faire, la position de la feuille de verre 9 est de préférence déterminée très précisément au moyen d'une caméra vidéo 24 dont les signaux sont envoyés via la ligne 25 à un processeur 26, lequel - au moyen d'un programme de calcul approprié - pilote le moteur 28, via la ligne 27. Le moteur 28 entraîne une tige filetée 29 déplaçant un chariot 30 auquel le brûleur 8 est relié de manière fixe. De cette façon, il est possible de réaliser la surchauffe de zones 20 positionnées de travers.

Le brûleur 8 peut fonctionner de façon permanente ou seulement par intermittence lors du passage d'une feuille de verre. Il est piloté de nouveau par la caméra vidéo 24 et le processeur 26 actionnant, via les lignes 33 et 34, les vannes 35 et 36 qui régulent respectivement la quantité d'acétylène admise au travers de la canalisation 37 et la quantité d'oxygène admise au travers de la canalisation 38. Ces vannes 35 et 36 sont montées fixes, les canalisations 37 et 38 étant choisies dans un matériau souple et flexible pour leurs parties situées entre les vannes 35 et 36 et le chariot mobile 30.

Par une isolation thermique appropriée, il est fait en sorte que la température de l'espace intermédiaire 7 soit maintenue relativement basse. Eventuellement, il peut même être prévu un système de refroidissement par air froid. De cette façon, la canalisation 37 dans laquelle circule le gaz acétylène et le brûleur 8 est maintenue à une température basse pour laquelle il ne se produit pas de décomposition thermique de l'acétylène.

Les figures 2 à 4 illustrent un second mode de réalisation de l'invention où la surchauffe est effectuée cette fois dans le poste de bombage, la face inférieure de la feuille de verre étant surchauffée.

L'installation schématisée à la figure 2 reprend un certain nombre d'éléments caractéristiques de la figure 1 si ce n'est que cette fois, le four et le poste de bombage sont accolés. Le procédé de bombage est quant à son principe identique au procédé décrit précédemment.

Dans le cas représenté, la feuille de verre 9 n'a pas à être bombée dans sa partie centrale, mais ses ailes latérales doivent être repliées autour de deux axes de pliure 39, 40 ici parallèles aux rouleaux 2. Pour un tel bombage, avec un rayon de courbure relativement petit, il est ordinairement nécessaire d'employer une forme inférieure du type cadre articulé, sinon les parties extrêmes du cadre qui sont elles très recourbées viennent buter non sur le pourtour du vitrage mais dans les zones marginales où elles créent des défauts optiques. Ce phénomène de marquage peut être éviter selon l'invention en améliorant le préformage à l'aide de la forme mâle, de sorte que les ailes du vitrage soient déjà partiellement repliées au moment où l'élément inférieur est mis en contact avec la feuille de verre.

Dans l'exemple ici représenté, le cadre annulaire 45, visible de manière plus détaillée à la figure 3, est simplement constitué par un mono-rail continu définissant un pourtour de forme correspondante à celle de la forme de bombage 41. Ce cadre 45 est porté par un chariot 44 qui pénètre dans la station de bombage au moyen de rails 43 montés parallèles aux rouleaux 2 du convoyeur.

Le chariot 44 est équipé de brûleurs 42, qui sont situés juste sous les lignes de pliure 39 et 40 lorsque le chariot est en position sous l'élément supérieur. Ces brûleurs 42 sont ici du type rampes à gaz et sont alimentés en gaz combustible, de préférence du type acétylène, par des conduites 46, 47 et un flexible 48 connecté à une canalisation 49. Le gaz comburant, air ou de préférence oxygène pur, est de même acheminé au travers d'une canalisation 55, d'un flexible 54 et de conduites 52 et 53. Les débits respectifs en combustible et comburant sont réglés par des clapets 56 et 57.

Les flexibles 48 et 54 sont de préférence guidés par une chaîne en forme de chenille 59 qui les protège lors des mouvements du chariot 44 dans et hors de la station de bombage. Eventuellement ces chenilles peuvent être formées par des éléments isolants thermiques, même si ceux-ci ne sont pas obligatoires le chariot ne séjournant que très brièvement dans la station de bombage.

La figure 4 illustre le processus de bombage selon l'invention. La forme supérieure de bombage 41 a été abaissée et l'action du courant gazeux ascendant a eu pour conséquence le transfert de la feuille de verre 9 au contact de la forme 41. Comme on peut le voir sur cette figure, les parties latérales de la feuille de verre sont très peu repliées. On introduit alors le chariot 44 portant le cadre 45, les brûleurs 42 soufflant alors du gaz chaud très précisément en regard des lignes de pliures 39 et 40, de sorte que la viscosité du verre augmente localement et que l'action du courant gazeux ascendant suffit à obtenir un plaquage au moins partiel des ailes. L'étape suivante, ici non représentée, à savoir le pressage au moyen du cadre annulaire n'est donc plus destinée qu'à parfaire le pressage et peut être quasi instantanée, sans risquer de dégrader la qualité du vitrage.

Après le pressage, le chariot 44 est conduit par les rails 43 hors du poste de bombage 3 et la feuille de verre est récupérée par un cadre de trempe, ici non représenté, et monté sur un chariot roulant sur des rails parallèles aux rails 43. La feuille de verre est ainsi conduite vers le poste de trempe.

## Revendications

1. Procédé de bombage d'une feuille de verre (9) préchauffée à température de bombage, amenée en position horizontale sous un élément supérieur (14, 41), mise au contact dudit élément supérieur au moyen d'une force de nature pneumatique, puis déposée sur un élément inférieur de bombage (16, 45), **caractérisé par** par une surchauffe localisée de la feuille de verre par une flamme air-acétylène ou oxygène-acétylène.

2. Procédé de bombage d'une feuille de verre (9) selon la revendication 1, **caractérisé en ce que** la surchauffe est effectuée dans la zone intermédiaire (7) entre le four (1) et le poste de bombage (3).

3. Procédé de bombage d'une feuille de verre (9) selon la revendication 1, **caractérisé en ce que** la surchauffe est effectuée dans le poste de bombage (3).

4. Procédé selon l'une des revendications précédentes, **caractérisé en ce que** la température des conduites d'amenée du gaz acétylène est maintenue inférieure à 200°C.

5. Procédé selon la revendication 4, **caractérisé en ce que** les flammes sont dirigées vers les régions de la feuille de verre (9) devant subir la plus forte extension lors du bombage.

6. Dispositif de bombage d'une feuille de verre (9) comportant un four de bombage (1), un convoyeur horizontal (2), un poste de bombage (3) à la température de bombage et qui comporte un élément supérieur (41) placé au-dessus dudit convoyeur (2), un élément inférieur (45) venant la récupérer après qu'elle ait été transférée au contact dudit élément supérieur (41), et des moyens générant une force de nature pneumatique assurant le transfert au contact de l'élément supérieur (41), **caractérisé par** des brûleurs acétyléniques (42) portés par le chariot (43) transportant l'élément inférieur (45).

## Claims

1. Method of bending a glass sheet (9) preheated to bending temperature, the sheet being brought in a horizontal position beneath an upper element (14, 41), brought into contact with said upper element by means of a force of a pneumatic nature, then deposited on a lower bending element (16, 45), characterized by a localized additional heating of the glass sheet by an air-acetylene or oxygen-acetylene flame.

2. Method of bending a glass sheet (9) according to Claim 1, characterized in that the additional heating is carried out in the intermediate zone (7) between the furnace (1) and the bending station (3).

3. Method of bending a glass sheet (9) according to Claim 1, characterized in that the additional heating is carried out in the bending station (3).

4. Method according to one of the preceding Claims, characterized in that the temperature of the supply ducts for the acetylene gas is maintained below 200°C.

5. Method according to Claim 4, characterized in that the flames are directed towards the regions of the glass sheet (9) that are to undergo the greatest extension during bending.

6. Device for bending a glass sheet (9), comprising a bending furnace (1), a horizontal conveyor (2), a bending station (3) at the bending temperature and which comprises an upper element (41) situated above said conveyor (2), a lower element (45) recovering the glass sheet after it has been transferred in contact with said upper element (41), and means generating a force of a pneumatic nature assuring the transfer into contact with the upper element (41), characterized by acetylene burners (42) carried by the carriage (43) conveying the lower element (45).

## Patentansprüche

1. Verfahren zum Biegen einer auf Biegetemperatur erwärmten Glasscheibe (9), die in horizontaler Lage unter ein oberes Element (14,41) verbracht, mit Hilfe einer pneumatischen Kraft mit dem oberen Element in Kontakt gebracht und dann auf ein unteres Biegeelement (16,45) abgelegt wird, **gekennzeichnet** durch eine zusätzliche lokale Erwärmung der Glasscheibe durch eine Acetylen-Luft- oder eine Acetylen-Sauerstoff-Flamme.

2. Verfahren zum Biegen einer Glasscheibe (9) nach Anspruch 1, dadurch gekennzeichnet, daß die zusätzliche Erwärmung in der Zwischenzone (7) zwischen dem Ofen (1) und der Biegestation (3) durchgeführt wird.

3. Verfahren zum Biegen einer Glasscheibe (9) nach Anspruch 1, dadurch gekennzeichnet, daß die zusätzliche Erwärmung innerhalb der Biegestation (3) durchgeführt wird.

4. Verfahren nach einem der vorangehenden Ansprüche, dadurch gekennzeichnet, daß die Temperatur der das Acetylengas führenden Leitungen unterhalb von 200 °C gehalten wird.

5. Verfahren nach Anspruch 4, dadurch gekennzeichnet, daß die Flammen auf diejenigen Bereiche der Glasscheibe (9) gerichtet werden, die beim Biegevorgang am stärksten gedehnt werden.

6. Vorrichtung zum Biegen einer Glasscheibe (9), mit einem Biegeofen (1), einem Horizontalförderer (2), einer Biegestation (3) im Bereich der Biegetemperatur mit einem oberhalb des Horizontalförderers (2) angeordneten oberen Element (41), einem unteren Element (45), das die Glasscheibe aufnimmt, nachdem sie mit dem oberen Element (41) in Kontakt gebracht wurde, sowie mit Mitteln zur Erzeugung einer pneumatischen Kraft, die das Inkontaktbringen mit dem oberen Element (41) sicherstellt, gekennzeichnet durch Acetylenbrenner (42), die auf dem das untere Element (45) verfahrenden Wagen (43) angeordnet sind.
